# EUROPEAN PATENT APPLICATION

(11) **EP 2 457 971 A1**
(43) Date of publication of application: **30.05.2012**
(21) Application number: 10801989.4
(22) Date of filing: 22.06.2010
(51) Int. Cl.: C09J 11/04, C09J 163/00, C09J 175/04, C09J 167/00, C08K 3/34

(54) **RESIN WITH HIGH HEAT TRANSFER**

(30) Priority: 21.07.2009 ES 200930486
(71) Applicant: Cupa Innovación, S.L.U., 36213 Vigo Pontevedra (ES)
(72) Inventor: FERNÁNDEZ FERNÁNDEZ, Javier, E-36213 Vigo - Pontevedra (ES)
(74) Representative: Carvajal y Urquijo, Isabel
(86) International application number: PCT/ES2010/070420
(87) International publication number: WO 2011/009984

(57) **Abstract**

The present invention refers to a resin with high heat transfer and potential, specially designed to transfer heat between two layers of different nature, one of which layers acts as energy receiver via the outer face thereof and energy emitter via the inner face thereof, and the other of which acts as receiver of the accumulated energy in the resin, acting as connecting bridge between the two layers. The resin with high heat transfer of the invention comprises granular particles of slate and preferably granular particles of a metallic nature, in a polymeric matrix.

## Description

### TECHNICAL FIELD OF THE INVENTION

The resin with high heat transfer of the invention refers to the field of construction materials, particularly, fixing elements between structures. It is a loaded adhesive, hardened by the exothermic chemical reaction after the addition of a curing agent to the polymeric matrix and load mixture.

### BACKGROUND OF THE INVENTION

In the art, there is a need to couple pieces of materials which intervene in heat transfer processes the joining of which, due to their nature or accessibility problems or other requirements, cannot be performed, or is not appropriate to be performed, through welding. Therefore there is a need to develop an adhesive material capable of making firm joining between materials of different nature, which withstands high temperatures and which transmits the energy between both materials without losses. There exist several patents which describe adhesive resins with high conductivity of this type, although in the current art, all of them produce certain energy loss in the heat transfer process.

For example, the Japanese patent JP 2007262392 describes a thermoplastic which can be applied directly on a heat generator. This patent does not refer to a resin, and therefore does not anticipate the use of resins for similar heat requirements.

Chinese patent CN101302413 describes an epoxy resin with low heat transfer which includes silver powder and carbon nanotubes, both of them to attain good electrical transfer characteristics. This patent, although it anticipates the use of metals incorporated in the resin, does not study the effects of said incorporation on its properties as heat transfer agent, so that it does not suggest the particular result of the resin of the invention.

Japanese patent JP2008088406 describes an epoxy resin which provides high thermal conductivity. The load of the resin is inorganic. The difference with the present invention lies in the addition in the latter of loads constituted by particles of natural stone as a booster of thermal conductivity of the polymeric matrix. This is not usually suggested in the art, since poor heat transfer properties of stony materials are well known. Slate, however, constitutes an exception, and among natural stone it has very good thermal properties.

Japanese patent JP2002277185 describes a laminated structure which irradiates heat. This laminated structure comprises two panels joined by an adhesive liquid obtained from a resin loaded with a highly conductive thermal material. Although this patent describes the use of a resin loaded with a highly conductive thermal filler material between two surfaces, the use of slate in the present invention provides the final mixture obtained with an added enhancing of the heat energy transmitted and low diffusivity which have been astounding.

Slate slabs are known and applied in construction for the harnessing of the energy received from solar radiation. However, the applicant does not know about the application of slate particles of reduced granulometry for the purposes of heat transmission and enhancement at the core of a low-conductivity polymeric matrix. This application had a series of problems a priori unsolved by the state of the art.

Traditionally, the slate extraction process has generated a great amount of waste of very diverse granulometry and there have been attempts to re-use it for different purposes, such as raw material in the industry of ceramics, as part of the composition of cement, or as asphaltic agglomerate. The modernization of transformation processes has given rise to waste of a uniform granulometry which can be used for unusual purposes up to the present. The option of using this material as load for polymeric matrixes opens up the possibility of obtaining adhesive compounds with greater thermal conductivity and lower thermal diffusivity properties than other similar compounds developed so far, and at a lower price. Obtaining slate granules with the appropriate size to be used as base of the resin of the invention is a standard process in the art.

Similarly, obtaining granule particles of a metallic nature with the appropriate size to be used as base of the resin of the invention is also a standard process in the art.

The problem presented in the art is to develop an adhesive and versatile material which withstands high temperatures with optimal heat transfer properties and low diffusivity, to be applied between two outer layers which cannot be appropriately joined through industrial welding processes, and which solves the current problems of the high cost for obtaining similar materials.

The solution offered by the present invention is a resin loaded with slate particles, and preferably with particles of a metallic nature as well, which provides the technological advantages of greater efficiency in heat transmission and a manufacturing price reduction.

### DESCRIPTION OF THE INVENTION

Therefore, the present invention is a resin with high heat transfer comprising granular particles of slate in a low thermal conductivity polymeric matrix. In a preferred embodiment, the percentage of said slate particles is between 40% and 80% by weight, preferably between 60% and 70% by weight, and more preferably 66.3% by weight. The slate load focuses its contribution on the accumulation of heat in the core of a material with reduced conductivity, producing the effect of thermal inertia deposit or greenhouse effect.

The most preferred embodiment of the invention is that the resin also comprises granular particles of a metallic nature. A preferred embodiment is that the total load of slate particles and particles of a metallic nature ranges between 40% and 80% by weight, preferably between 60% and 70% by weight, and most preferably 66.3% by weight.

Another embodiment of the invention is that the polymeric matrix is selected between the group comprising epoxy resins, polyester resins and polyurethane resins.

In the present application, "resin with high heat transfer" means a resin which has a quantifiable heat transfer exceeding 0.5W/mk.

In the present application, "low-conductivity polymeric matrix" means a polymeric matrix which has a quantifiable heat transfer lower than 0.4W/mk.

In the present application, "granular particle" means a particle with an approximately circular grain which size ranges between 0.16mm and 0.5mm.

In the present application, "metallic nature" refers to the behaviour of those materials which are good heat and electricity conductors, have high density and are solid at room temperature. These materials of a metallic nature have a thermal conductivity ranging between 45W/mk and 390W/mk.

The resin of the invention acts as a heat transfer agent between the two outer layers and enhances a high temperature gradient between the upper energy receiving surface and the lower energy emitting surface. The energy transfer process granting inventive step to the present invention is the following. The receiving surface transmits the energy received to the resin of the invention, which contains slate particles. The amount of energy capable of being absorbed by the slate is large due to its low specific heat and great thermal conductivity. Also, the low thermal conductivity polymeric matrix used in the invention provides great efficiency for energy accumulation in the slate as it acts as an insulating agent. Thus, the slate particles reach a temperature which is higher than that of the energy emitting layer, thus boosting the energy resulting in the aforementioned greenhouse effect. The energy is transmitted to the energy receiving layer without having suffered any losses produced by the support change, and even providing greater heat. Furthermore, possible sudden changes of temperature both in the emitting layer and in the receiving layer will not produce a variation of the energy of the resin due to the low difussibility also provided mainly by the state load.

The great efficiency of the resin of the invention can be specially applied when heat energy harnessing is necessary for its use in material energy efficiency processes. Nowadays, resins which are efficient for these uses do not exist.

The following examples are provided in order to illustrate, but in no way limit, the invention.

### EXAMPLES

### Example 1: Obtaining a resin with high energy transfer with slate particles.

Slate powder with a grain size of 16µm was obtained by a standard air aspiration process of the powder generated during the process of cutting slate slabs in quarries. Next, it was sieved to eliminate bigger grains. 100g of Resoltech 1020T epoxy resin were pre-mixed with 30g of Resoltech 1028 X curing agent with a stirring rod in a polypropylene container capable of resisting the exothermic reaction produced. Once the polymeric matrix and curing agent were mixed, 256.1g of slate powder were added stirring continuously until obtaining a homogeneous mixture. The application was performed using a metallic roller specific for the application of resins, during the open time of the resin obtained. In the present application, "open time" refers to the time the resin takes to start to reticulate, that is, the time it takes to start hardening. A final resin is obtained with a component ratio of 33.67% by weight of polymeric matrix (including the curing agent) and 66.3% by weight of 16µm slate powder.

### Example 2: Measurement of energy transfer of a resin with high energy transfer with slate particles: boosting of the temperature gradient in the energy receiving layer of +0.5°C relating to the temperature of the energy emitting layer after a 20-minute exposure to 1200W/m² of radiated energy.

A test tube was made with the following structure:
- Upper layer for the reception of radiated energy on its outer face and for emitting radiated energy on the inner face: Slate slab with a 4mm thickness.
- 3mm core made of the resin obtained according to Example 1.
- Lower layer for the reception of energy on its inner part and for emitting energy on its outer part: Aluminium layer with a 0.6mm thickness.

The test tube thus made was cured during 24h at 20°C. Once cured, it was subjected in a test bench to a 1200W/m² radiated energy on its upper face, registering the temperatures of both faces with a K type Termopar (Kane-May KM330 model) in 5-minute time intervals, obtaining the measurements shown in Table I.

The data were compared with two blank test tubes. The first was constituted with the same structure as the test tube but using a resin without any load of slate or particles of a metallic nature. It was made mixing 100g of Resoltech 1020T epoxy resin with 40g of Resoltech 1028 X curing agent; with the same curing procedure. It was subjected to the same radiated energy under the same conditions as the test tube and produced the temperature results shown in Table II.

The other blank test tube was constituted by a slate slab with a 4mm thickness mechanically riveted with aluminium rivets to a 0.6mm thick aluminium sheet, as it is conventionally used in the state of the art in the field of heat exchangers, for example. The contact between the slate and the aluminium sheet was butt-contact on their entire surface, and the perimeter was sealed to avoid air infiltrations. It was subjected to the same radiated energy under the same conditions as the test tube and offered the temperature results shown in Table III.

**Table I: Test tube with slate powder.**

| **Measurement No.** | **Upper face(°C)** | **Lower face(°C)** | Δ**T.(°C)** |
|---|---|---|---|
| **1 (5 min.)** | 36.2 | 32.1 | 4.1 |
| **2 (10 min.)** | 53.9 | 51.5 | 2.4 |
| **3 (15 min.)** | 62.1 | 60.3 | 1.8 |
| **4 (20 min.)** | 69.3 | 69.8 | -0.5 |

**Table II: Blank test tube with unloaded resin.**

| **Measurement No.** | **Upper face(°C)** | **Lower face(°C)** | Δ**T (°C)** |
|---|---|---|---|
| **1 (5 min.)** | 36.2 | 35.3 | 0.9 |
| **2 (10 min.)** | 53.9 | 51.9 | 2 |
| **3 (15 min.)** | 62.1 | 59.9 | 2.2 |
| **4 (20 min.)** | 69.3 | 67.3 | 2 |

**Table III: Riveted blank test tube.**

| **Measurement No.** | **Upper face(°C)** | **Lower face(°C)** | Δ**T (°C)** |
|---|---|---|---|
| **1 (5 min.)** | 36.2 | 31.6 | 4.6 |
| **2 (10 min.)** | 53.9 | 49.8 | 4.1 |
| **3 (15 min.)** | 62.1 | 58 | 4.5 |
| **4 (20 min.)** | 69.3 | 65.3 | 4 |

It is observed that the lower aluminium layer of the test tube with the resin of the invention was 0.5°C hotter than the upper slate face which received the radiation. Therefore, there exists a gain in the energy transmitted from this radiation time. By contrast, the lower aluminium layer of the blank test tube with unloaded resin was 2°C colder than the upper face, corresponding to an energy loss. The results of the riveted test tube show that the temperature of the lower face was never less than 4°C lower with respect to the upper face.

### Example 3: Obtaining a resin A with high energy transfer with slate particles and particles of a metallic nature.

Slate powder with a grain size of 16µm was obtained by a standard air aspiration process of the powder generated during the process of cutting slate slabs in quarries. Next, it was sieved to eliminate bigger grains. 8:8kg of the 16µm slate powder thus obtained were pre-mixed with 7.8kg of 400µm commercial aluminium powder, and 5.9kg of Resoltech 1020T epoxy resin without a curing agent were added in a mixing body MV01 VALVE with internal mixer RTM2. It was subjected to continuous stirring at room temperature until reaching a homogenous mixture. A 2000W heater connected in line heated the resin in a range between 35 and 50°C, reducing the viscosity of the mix to facilitate the decantation and application. The product obtained was applied using a gun connected to a dosing system through pneumatic plate pumps through two flexible hoses. The mixture of the polymeric matrix and load was decanted through one of the hoses, and through the other 2.5kg of Resoltech 1028 X curing agent were added to the mixture, applied in-situ at the gun tip. 25kg of final resin were obtained, with a component ratio of 33.83% by weight of polymeric matrix (including the curing agent), 35.17% by weight of 16µm slate powder and 31 % by weight of 400µm metallic load.

### Example 4: Measurement of energy transfer of A: boosting of the temperature gradient in the energy receiving layer of +1.5°C relating to the temperature of the energy emitting layer after a 20-minute exposure to 1200W/m² of radiated energy.

A test tube was made with the following structure:
- Upper layer for the reception of radiated energy on its outer face and for emitting radiated energy on the inner face: Slate slab with a 4mm thickness.
- 3mm core made of the resin obtained according to Example 3.
- Lower layer for the reception of energy on its inner part and for emitting energy on its outer part: Aluminium layer with a 0.6mm thickness.

The test tube thus made was cured during 24h at 20°C. Once cured, it was subjected in a test bench to a 1200W/m² radiated energy on its upper face, registering the temperatures of both faces with a K type Termopar (Kane-May KM330 model) in 5-minute time intervals, obtaining the measurements shown in Table IV.

**Table IV: Test tube A.**

| **Measurement No.** | **Upper face (°C)** | **Lower face (°C)** | Δ**T (°C)** |
|---|---|---|---|
| **1 (5 min.)** | 36.2 | 35.6 | 0.6 |
| **2 (10 min.)** | 53.9 | 52.7 | 1.2 |
| **3 (15 min.)** | 62.1 | 63 | -0.9 |
| **4 (20 min.)** | 69.3 | 70.8 | -1.5 |

It is observed that the lower aluminium layer of the test tube with the resin of the invention was 0.5°C hotter than the upper slate face which received the radiation; and that as of 15 minutes of radiation the resin was capable of transmitting more energy than what it received. Therefore, there exists a gain in the energy transmitted from this radiation time.

### Example 5: Obtaining a resin B with high energy transfer with slate particles and particles of a metallic nature.

5.9kg of Resoltech 1040T epoxy resin were pre-mixed with 2.5kg of Resoltech 1028 X curing agent with a stirring rod in a polypropylene container capable of resisting the exothermic reaction produced. Once the polymeric matrix and curing agent were mixed, 10.1kg of slate powder and 6.5kg of 400µm commercial aluminium powder were added stirring continuously until obtaining a homogeneous mixture. The application was performed using a metallic roller specific for the application of resins, during the open time of the resin obtained. 25kg of final resin are obtained with a component ratio of 33.67% by weight of polymeric matrix (including the curing agent), 40.41% by weight of 16µ slate powder and 25.92% by weight of 400µm metallic load.

### Example 6: Measurement of energy transfer of B: booting of the temperature gradient in the energy receiving layer of +1°C relating to the temperature of the energy emitting layer after a 20-minute exposure to 1200W/m² of radiated energy.

A test tube was made with the following structure:
- Upper layer for the reception of radiated energy on its outer face and for emitting radiated energy on the inner face: Slate slab with a 4mm thickness.
- 3mm core made of the resin obtained according to Example 5.
- Lower layer for the reception of energy on its inner part and for emitting energy on its outer part: Aluminium layer with a 0.6mm thickness.

The test tube thus made was cured during 24h at 20°C. Once cured, it was subjected in a test bench to a 1200W/m² radiated energy, registering the temperatures of both faces with a K type Termopar (Kane-May KM330 model) in 5-minute time intervals, obtaining the measurements shown in Table V.

**Table V: Test tube B.**

| **Measurement No.** | **Upper face (°C)** | **Lower face (°C)** | Δ**T.(°C)** |
|---|---|---|---|
| **1 (5 min.)** | 37.7 | 36.8 | 0.9 |
| **2 (10 min.)** | 55.8 | 54.5 | 1.3 |
| **3 (15 min.)** | 64.9 | 62.6 | 2.3 |
| **4 (20 min.)** | 70.9 | 71.9 | -1 |

It is observed that the lower aluminium layer of the test tube was 1 °C hotter than the upper slate face which received the radiation. Therefore, there exists a gain in the energy transmitted.

### BRIEF DESCRIPTION OF THE DRAWINGS

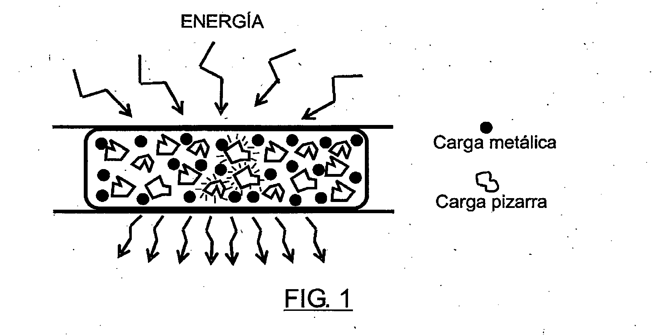

Figure 1. Scheme of the resin applied between two layers of material.

## Claims

1. Resin with high heat transfer, comprising granular slate particles in a low thermal conductivity polymeric matrix.

2. Resin according to claim 1, in which the percentage of said slate particles is between 40% and 80% by weight.

3. Resin according to claim 1, in which the percentage of said slate particles is between 60% and 70% by weight.

4. Resin according to any of the preceding claims, comprising granular particles of a metallic nature.

5. Resin according to claim 4, in which the total load of said slate particles and particles of a metallic nature ranges between 40% and 80% by weight.

6. Resin according to claim 4, in which the total load of said slate particles and particles of a metallic nature ranges between 60% and 70% by weight.

7. Resin according to any of the preceding claims, in which said polymeric matrix is selected between the group comprising epoxy resins, polyester resins and polyurethane resins.
